# EUROPÄISCHE PATENTANMELDUNG

(11) **EP 0 891 109 A2**
(43) Veröffentlichungstag der Anmeldung: **13.01.1999**
(21) Anmeldenummer: 98111144.6
(22) Anmeldetag: 17.06.1998
(51) Int. Cl.: H04Q 7/22

(54) **Verfahren und Mobil-Kommunikationssystem zur Steuerung eines Kurznachrichtendienstes**

(30) Priorität: 17.06.1997 DE 19725574; 17.06.1997 DE 19725575
(71) Anmelder: SIEMENS AKTIENGESELLSCHAFT, 80333 München (DE)
(72) Erfinder: Tillmann, Matthias, 36251 Bad Hersfeld (DE)

(57) **Zusammenfassung**

Die erfindungsgemäße Lösung sieht vor, daß von der Teilnehmerdatenbasis (HLR) in einem Mobilfunknetz (PLMN), sobald sie erkennt, daß eine Zustellung von in Diensteeinrichtungen (SMSC1, SMSC2) gespeicherten Kurznachrichten (SM) zu einer Mobilstation (MSB) wieder möglich ist, die gekennzeichneten Diensteeinrichtungen (SMSC1, SMSC2) nacheinander alarmiert werden. Auf diese Weise wird das parallele Signalisieren einer Flut von Kurznachrichten, die von mehreren Diensteeinrichtungen gesendet werden, innerhalb einer kurzen Zeitperiode zur jeweiligen Vermittlungseinrichtung durch die Teilnehmerdatenbasis vermieden. Dabei hat sich als besonders vorteilhaft erwiesen, ein Alarmsteuerzeichen (HAF) zur Kennzeichnung, daß Wartedaten für mehrere Diensteeinrichtungen vorliegen, in die Teilnehmerdatenbasis (HLR) für den mobilen Teilnehmer einzutragen, oder zumindest einen Zeitgeber (DT) zur Verzögerung der jeweils nachfolgenden Alarmierungsprozedur zu starten.

## Beschreibung

Die Erfindung betrifft ein Verfahren und ein Mobilkommunikationssystem zur Steuerung eines Kurznachrichtendienstes, bei dem von einer Mobilstation eines in einer Teilnehmerdatenbasis eines Mobilfunknetzes registrierten mobilen Teilnehmers Kurznachrichten empfangen werden können.

Der Kurznachrichtendienst (Short Message Service) ermöglicht einem mobilen Teilnehmer eines Mobilfunknetzes, alphanumerische Nachrichten über seine Mobilstation zu senden und zu empfangen. Jeder mobile Teilnehmer ist in einer Teilnehmerdatenbasis (Heimatregister) des Mobilfunknetzes mit seinen Daten und Diensten registriert, wobei auch für die Inanspruchnahme des Kurznachrichtendienstes eine entsprechende Berechtigungsinformation vorliegen muß. Eine oder mehrere Kurznachrichten werden von einem Teilnehmer eines Kommunikationsnetzes (A-Teilnehmer) zum mobilen Teilnehmer (B-Teilnehmer) ausgesendet und in speziellen, für den Kurznachrichtendienst vorgesehenen Diensteeinrichtungen (Short message service center) gespeichert. Üblicherweise gibt es mehrere Diensteeinrichtungen mit zwischengespeicherten Kurznachrichten.

Jede Diensteeinrichtung puffert die Kurznachrichten - beispielsweise in der Reihenfolge ihrer Ankunft -, bevor ein Zustellversuch zu einer Vermittlungseinrichtung, in deren Bereich die Mobilstation des B-Teilnehmers aktiviert ist, iniiert wird. Eine oder mehrere Zugangseinrichtungen (Gateway /Interworking Mobile Switching Center) bilden jeweils das Bindeglied zwischen den Diensteeinrichtungen und der Teilnehmerdatenbasis des mobilen Teilnehmers sowie der für die Mobilstation des mobilen Teilnehmers zuständigen Vermittlungseinrichtung. Die Zugangseinrichtung vereint nicht nur Funktionen einer Zugangs-Vermittlungseinrichtung bekannter Art (Gateway Mobile Switching Center) an der Schnittstelle des Mobilfunknetzes zu anderen Kommunikationsnetzen, sondern übernimmt zur Behandlung des Kurznachrichtendienstes zusätzliche Funktionen wie beispielsweise die Protokollumsetzung vom Signalisierungsprotokoll der Diensteeinrichtungen zum Signalisierungsprotokoll (Nr. 7 Signalisierung) des Mobilfunknetzes. Die Zugangseinrichtung fordert darüber hinaus von der für den B-Teilnehmer zuständigen Teilnehmerdatenbasis Routinginformationen für die Leitweglenkung der Kurznachrichten sowie Diensteinformationen bezüglich des Kurznachrichtendienstes an und sendet die Kurznachrichten nach Erhalt dieser Informationen zu der aktuell zuständigen Vermittlungseinrichtung aus. Die Vermittlungseinrichtung, in deren Bereich die Mobilstation des B-Teilnehmers aktiv geschaltet ist, sendet die empfangene Kurznachricht nach bekannter Art und Weise über ein Funkübertragungssystem drahtlos zur Mobilstation weiter.

Für den Fall, daß die Kurznachricht der Mobilstation nicht zugestellt werden kann - beispielsweise weil die Mobilstation nicht erreichbar ist oder weil die Kurznachricht in dem Teilnehmeridentitätsmodul (Subscriber Identity Module) der Mobilstation mangels Speicherkapazität nicht mehr hinterlegt werden kann - wird die Teilnehmerdatenbasis über die Zugangseinrichtung darüber informiert. Die Zugangseinrichtung empfängt zuvor von der zuständigen Vermittlungseinrichtung eine Meldung, daß eine Zustellung der Kurznachrichten erfolglos verlaufen ist. Da eine oder mehrere Kurznachrichten von jeder Diensteeinrichtung an den mobilen Teilnehmer gerichtet werden können, entsteht häufig die Situation, daß mehrere Diensteeinrichtungen erfolglos die Zustellung der Kurznachrichten versucht haben. In diesem Fall werden Wartedaten (Message Waiting Data) zur Kennzeichnung der nicht erfolgreichen Diensteeinrichtungen sowie Steuerzeichen zur Kennzeichnung der Ursache der erfolglosen Zustellung in die Teilnehmerdatenbasis für den mobilen Teilnehmer eingetragen. Sobald die Teilnehmerdatenbasis Informationen über die Wiedererreichbarkeit der Mobilstation hat, versuchen nun alle Diensteeinrichtungen erneut, ihre gespeicherten Kurznachrichten dem mobilen Teilnehmer zuzustellen. Da die Teilnehmerdatenbasis alle Diensteeinrichtungen, die Kurznachrichten für den mobilen Teilnehmer vorliegen haben, nahezu gleichzeitig über die Wiedererreichbarkeit der Mobilstation informiert, treffen in der zuständigen Vermittlungseinrichtung viele Zustellversuche - beispielsweise nach einer längeren Abwesenheit der Mobilstation - parallel ein, die zu einer hohen Signalisierungslast führen, aber von denen zu einem Zeitpunkt nur eine Zustellung zur Mobilstation durchgeführt werden kann. Im ungünstigsten Fall, beispielsweise nach Ablauf einer bestimmten Zeitperiode oder Überschreiten einer maximalen Anzahl von Zustellversuchen, kann die Kurznachricht von einer Diensteeinrichtung überhaupt nicht mehr zugestellt werden.

Es ist Aufgabe der vorliegenden Erfindung, ein Verfahren und ein Mobil-Kommunikationssystem anzugeben, durch das die Steuerung des Kurznachrichtendienstes für die Zustellung von in mehreren Diensteeinrichtungen gespeicherten Kurznachrichten an die wieder empfangsbereite Mobilstation verbessert werden kann.

Diese Aufgabe wird gemäß der Erfindung durch die Merkmale des Patentanspruchs 1 hinsichtlich des Verfahrens und durch die Merkmale des Patentanspruchs 13 hinsichtlich des Mobil-Kommunikationssystems gelöst.

Weiterbildungen der Erfindung sind in den Unteransprüchen angegeben.

Die erfindungsgemäße Lösung sieht vor, daß von der Teilnehmerdatenbasis, sobald sie erkennt, daß eine Zustellung von Kurznachrichten zur Mobilstation wieder möglich ist, die gekennzeichneten Diensteeinrichtungen nacheinander alarmiert werden. Auf diese Weise wird das parallele Signalisieren einer Flut von Kurznachrichten, die von mehreren Diensteeinrichtungen gesendet werden, innerhalb einer kurzen Zeitperiode zur jeweiligen Vermittlungseinrichtung durch die Teilnehmerdatenbasis vermieden. Durch das aufeinanderfolgende Alarmieren der jeweiligen Diensteeinrichtungen erfolgt eine zeitliche Entzerrung der Kurznachrichtenübertragung, was hinsichtlich der Signalisierungslast - insbesondere einer möglichen Überlast - für die Zustellung und für die Ablehnung von Zustellversuchen an die Diensteeinrichtungen, die einen erneuten Versuch unternommen haben, zu Vorteilen gegenüber dem bekannten Verfahren führt.

Es hat sich als besonders vorteilhaft erwiesen, ein Alarmsteuerzeichen zur Kennzeichnung, daß Wartedaten für mehrere Diensteeinrichtungen vorliegen, in die Teilnehmerdatenbasis für den mobilen Teilnehmer einzutragen, wenn eine Alarmierungsprozedur einer ersten Diensteeinrichtung gestartet wird. Durch das Alarmsteuerzeichen, das zusätzlich zu den Steuerzeichen für die Kennzeichnung der Ursache der erfolglosen Zustellung aufgenommen wird, kann der Zustand der Teilnehmerdatenbasis in bezug auf das Vorliegen mehrerer Diensteeinrichtungen mit Kurznachrichten für den jeweiligen mobilen Teilnehmer auf einfache Weise festgestellt und verändert werden.

Auch ist es von Vorteil, wenn das Alarmsteuerzeichen von der Teilnehmerdatenbasis bei der Übermittlung von Routinginformationen an die mit der jeweiligen Diensteeinrichtung verbundene Zugangseinrichtung mitgesendet wird und wenn von der Zugangseinrichtung auf eine Rückmeldung der Vermittlungseinrichtung über die erfolgreiche Zustellung der Kurznachricht gewartet und bei Eintreffen der Rückmeldung die erfolgreiche Zustellung der Teilnehmerdatenbasis mitgeteilt wird. Von der Teilnehmerdatenbasis wird daraufhin die Alarmierungsprozedur zu der jeweils nächsten Diensteeinrichtung gestartet. Diese Vorgehensweise hat den Vorteil, daß von der Teilnehmerdatenbasis die Alarmierungsprozedur zur nächsten Diensteeinrichtung erst dann initiiert wird, wenn ihr die erfolgreiche Zustellung der zuvor gesendeten Kurznachricht bestätigt wird.

Die Zugangseinrichtung ist nämlich zuvor durch Mitsenden des Alarmsteuerzeichens darüber informiert worden, daß noch weitere Wartedaten über Diensteeinrichtungen mit anstehenden Kurznachrichten vorliegen. Dabei merkt sich die Zugangseinrichtung das zuvor empfangene Alarmsteuerzeichen und teilt die erfolgreiche Zustellung der Kurznachricht daher anschließend der Teilnehmerdatenbasis mit, bevor diese die jeweils nächstfolgende Diensteeinrichtung alarmiert.

Vorteilhaft ist es auch, wenn das Alarmsteuerzeichen in der Teilnehmerdatenbasis gelöscht wird, sobald nurmehr die Wartedaten zu einer Diensteeinrichtung vorliegen.

Es hat sich ebenfalls als vorteilhaft erwiesen, wenn zum aufeinanderfolgenden Alarmieren eine Alarmierungsprozedur zu einer Diensteeinrichtung initiiert und dabei zumindest ein Zeitgeber zur Verzögerung der jeweils nachfolgenden Alarmierungsprozedur zu einer weiteren Diensteeinrichtung gestartet wird. Durch den Zeitgeber wird das parallele Signalisieren einer Flut von Kurznachrichten, die von mehreren Diensteeinrichtungen gesendet werden, innerhalb einer kurzen Zeitperiode zur jeweiligen Vermittlungseinrichtung durch die Teilnehmerdatenbasis auf besonders einfache Weise vermieden.

Es hat sich als vorteilhaft erwiesen, für den Zeitgeber eine Verzögerungszeit, die an die mittlere Dauer der Zustellungen unterschiedlicher Kurznachrichten angepaßt ist, einzustellen. Auch ist es gemäß einer bevorzugten Ausgestaltung der Erfindung möglich, für den Zeitgeber eine Verzögerungszeit, die an die Netzbedingungen des Mobilfunknetzes angepaßt ist, einzustellen.

Von Vorteil ist es weiterhin, wenn mehrere Zeitgeber für die Diensteeinrichtungen verwendet werden. Dadurch ist eine individuelle Anpassung der Verzögerungszeiten an die Zahl und Länge der Kurznachrichten unterschiedlich frequentierter Diensteeinrichtungen besser möglich.

Eine Weiterbildung der Erfindung sieht vor, daß die Wartedaten zu den Diensteeinrichtungen in der Reihenfolge der erfolglosen Zustellversuche in die Teilnehmerdatenbasis aufgenommen werden. Dabei werden gemäß einer Ausgestaltung der Erfindung die Wartedaten weiterer Diensteeinrichtungen, die während der Alarmierung einer Diensteeinrichtung einen erfolglosen Zustellungsversuch gestartet haben, zusätzlich an das Ende der Reihenfolge aufgenommen. Den jeweiligen Diensteeinrichtungen wird dann die Möglichkeit eines erneuten Zustellversuchs signalisiert, sobald sie an der Reihe sind.

Gemäß einer anderen Weiterbildung der Erfindung können die Teilnehmerdatenbasis, die Zugangseinrichtung und die Vermittlungseinrichtung zu demselben Mobilfunknetz gehören oder die Vermittlungseinrichtung und/oder die Zugangseinrichtung liegen in einem anderen Mobilfunknetz als die Teilnehmerdatenbasis. Damit können die Kurznachrichten mehrerer Diensteeinrichtungen, die zuvor gemäß der Erfindung aufeinander folgend alarmiert werden, auch netzübergreifend zugestellt werden.

Das Mobil-Kommunikationssystem gemäß der Erfindung weist neben den beschriebenen Einrichtungen auch Steuermittel in der Teilnehmerdatenbasis auf, die, sobald sie erkennen, daß eine Zustellung von Kurznachrichten zur Mobilstation wieder möglich ist, die gekennzeichneten Diensteeinrichtungen nacheinander alarmieren. Zum aufeinanderfolgenden Alarmieren eignet sich besonders ein in die Speichermittel der Teilnehmerdatenbasis eintragbares Alarmsteuerzeichen zur Kennzeichnung, daß Wartedaten für zumindest zwei Diensteeinrichtungen vorliegen. Das Alarmsteuerzeichen wird eingetragen, wenn die Steuermittel der Teilnehmerdatenbasis eine Alarmierungsprozedur zu einer ersten Diensteeinrichtung starten. Alternativ dazu kann von den Steuermittel in der Teilnehmerdatenbasis eine Alarmierungsprozedur zu einer Diensteeinrichtung (initiiert und dabei zumindest ein Zeitgeber zur Verzögerung der jeweils nachfolgenden Alarmierungsprozedur zu einer weiteren Diensteeinrichtung gestartet werden.

Die Erfindung wird anhand eines in einer Zeichnung dargestellten Ausführungsbeispiels näher erläutert. Im einzelnen zeigen
- FIG 1: das Blockschaltbild eines Mobil-Kommunikationssystems gemäß der Erfindung zur Steuerung des Kurznachrichtendienstes unter Verwendung eines Alarmsteuerzeichens,
- FIG 2: den Nachrichtenfluß zwischen den Einrichtungen des Mobil-Kommunikationssystems gemäß FIG 1 zur aufeinanderfolgenden Alarmierung zumindest zweier Diensteeinrichtungen durch die Teilnehmerdatenbasis,
- FIG 3: ein Flußdiagramm zum Initiieren der Alarmierungsprozedur und zur Steuerung des Alarmsteuerzeichens in der Teilnehmerdatenbasis,
- FIG 4: das Blockschaltbild eines Mobil-Kommunikationssystems gemäß der Erfindung zur Steuerung des Kurznachrichtendienstes unter Verwendung eines Zeitgebers,
- FIG 5: den Nachrichtenfluß zwischen den Einrichtungen des Mobil-Kommunikationssystems gemäß FIG 4 zur aufeinanderfolgenden Alarmierung zumindest zweier Diensteeinrichtungen durch die Teilnehmerdatenbasis, und
- FIG 6: ein Flußdiagramm zum Initiieren der Alarmierungsprozedur und zur Verzögerung nächstfolgender Alarmierungsprozeduren in der Teilnehmerdatenbasis.

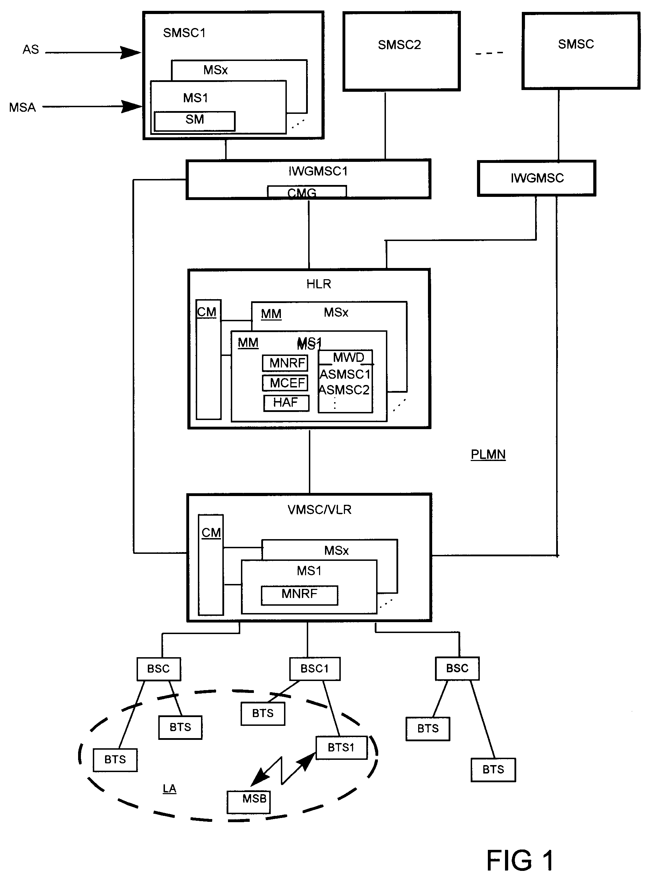

FIG 1 zeigt das Blockschaltbild eines Mobil-Kommunikationssystems zur Steuerung des Kurznachrichtendienstes (Short-Message-Service), bei dem von Teilnehmern eines Kommunikationsnetzes, A-Teilnehmern, Kurznachrichten an einen mobilen Teilnehmer, dem B-Teilnehmer, gesendet und von einer Mobilstation des mobilen Teilnehmers empfangen werden können. Voraussetzungen für den Empfang der Kurznachrichten ist zum einen eine Berechtigung des mobilen Teilnehmers zur Inanspruchnahme des Kurznachrichtendienstes sowie die Erreichbarkeit der Mobilstation. Im vorliegenden Beispiel werden Kurznachrichten von einem festverdrahteten Teilnehmer AS eines leitungsgebundenen Kommunikationsnetzes oder von einem mobilen Teilnehmer MSA eines Mobilfunknetzes initiiert und an einen mobilen Teilnehmer eines Mobilfunknetzes PLMN mit der Mobilstation MSB gerichtet. Es sei angenommen, daß die Mobilstation MSB des B-Teilnehmers sich in einem Aufenthaltsgebiet LA befindet, in dem mehrere Basis-Sende/Empfangsstationen BTS ...BTS1 angeordnet sind. Die Basis-Sende/Empfangsstationen BTS...BTS1 gehören zum funktechnischen Teilsystem des Mobilfunknetzes PLMN und kommunizieren über eine Luftschnittstelle mit Mobilstationen, die sich in ihrem jeweiligen Funkversorgungsbereich aufhalten. Neben dem dargestellten Aufenthaltsbereich LA gibt es weitere Aufenthaltsbereiche mit entsprechenden Basis-Sende/Empfangsstationen BTS.

Das funktechnische Teilsystem eines Mobilfunknetzes verfügt darüber hinaus über Basisstationssteuerungen BSC... BSC1, die funktechnische Steuerungsfunktionen übernehmen und jeweils mit mehreren Basis-Sende/Empfangsstationen BTS...BTS1 in Verbindung stehen. Im vorliegenden Beispiel sei angenommen, daß im Aufenthaltsgebiet LA für die Zustellung der Kurznachrichten eine Signalisierung zwischen der Mobilstation MSB und der Basis-Sende/Empfangsstation BTS1 stattfindet, an die die Basisstationssteuerung BSC1 angeschlossen ist. Die Basisstationssteuerungen BSC...BSC1 sind über eine Schnittstelle mit Vermittlungseinrichtungen -den Mobilvermittlungsstellen- im Mobilfunknetz PLMN verbunden. Im vorliegenden Beispiel ist die Basisstationssteuerung BSC1 an eine Vermittlungseinrichtung VMSC angeschlossen, in deren Zuständigkeitsbereich die aktivierte Mobilstation MSB des mobilen Teilnehmers fällt. Auch für die Behandlung des Kurznachrichtendienstes übernimmt die Vermittlungseinrichtung VMSC vermittlungstechnische Funktionen, z.B. das Durchschalten der eintreffenden Kurznachrichten zu Mobilstationen, die sich in dem von ihr betreuten Aufenthaltsgebiet LA befinden. Dabei ist der Vermittlungseinrichtung VMSC eine Teilnehmerdatenbasis VLR zugeordnet, in der Daten und andere Informationen für die mobilen Teilnehmer vorübergehend gespeichert werden, deren Mobilstationen im Aufenthaltsgebiet LA sich bewegen. So sind im vorliegenden Beispiel Teilnehmerdaten für mobile Teilnehmer MS1..MSx in Speichereinheiten MM der Teilnehmerdatenbasis VLR eingetragen. Dabei sei angenommen, daß die Mobilstation MSB zum mobilen Teilnehmer MS1 gehört, an den die von dem A-Teilnehmer AS oder MSA gesendeten Kurznachrichten gerichtet sind.

Eine der für die mobilen Teilnehmer eintragbaren Steuerinformationen ist ein Steuerzeichen MNRF (Mobile station Not Reachable Flag), das bei nicht erreichbarer Mobilstation MSB von einer Steuereinheit CM der Teilnehmerdatenbasis VLR gesetzt und bei Wiedererreichbarkeit rückgesetzt werden kann. Dies bedeutet für den Kurznachrichtendienst, daß an dem Steuerzeichen MNRF der Status der jeweiligen Mobilstation eines mobilen Teilnehmers hinsichtlich einer möglichen oder nicht möglichen Zustellung der Kurznachrichten erkennbar ist.

Das Mobilfunknetz PLMN weist zumindest eine Teilnehmerdatenbasis HLR (Home Location Register) auf, in der die Daten und andere Informationen aller im Mobilfunknetz registrierten mobilen Teilnehmer permanent gespeichert sind. Die Teilnehmerdatenbasis HLR verfügt ebenfalls über Speichereinheiten MM, in denen für die Teilnehmer MS1..MSx die Teilnehmerdaten gespeichert sind. Darüber hinaus hat sie auch eine Steuereinheit CM, die zur Steuerung der Funktionen und Abläufe auch mit den Speichereinheiten MM verbunden ist. Die Teilnehmerdatenbasis HLR, die je nach Größe und Umfang des Mobilfunknetzes PLMN auch mehrfach vorhanden sein kann, ist vorzugsweise an zentraler Stelle angeordnet, während üblicherweise mehrere, mit den Vermittlungseinrichtungen des Mobilfunknetzes in Verbindung stehende Teilnehmerdatenbasen VLR vorzugsweise dezentral im Netz verteilt sind. Die Teilnehmerdatenbasen können untereinander kommunizieren, wobei im vorliegenden Beispiel nur die Verbindung zwischen der Teilnehmerdatenbasis HLR und der Teilnehmerdatenbasis VLR, in der der B-Teilnehmer mit seiner Mobilstation MSB aktuell registriert ist, dargestellt ist.

Die von dem A-Teilnehmer AS bzw. MSA abgesetzten Kurznachrichten werden beispielsweise in einer Diensteeinrichtung SMSC1 gespeichert. Ebenso gelangen Kurznachrichten anderer A-Teilnehmer - die nicht angegeben sind - an weitere Diensteeinrichtungen, von denen beispielhaft zwei Diensteeinrichtungen SMSC2 und SMSC dargestellt sind. Jede Diensteeinrichtung SMSC1, SMSC2, SMSC verfügt über Speichermittel zum Eintragen der eintreffenden Kurznachrichten SM für die jeweiligen mobilen Teilnehmer MS1..MSx. Üblicherweise sind die Diensteeinrichtungen SMSC1.. nicht Bestandteil des Mobilfunknetzes PLMN. Sie sind aber über eine oder mehrere Zugangseinrichtungen mit den Einrichtungen des Mobilfunknetzes PLMN verbunden. Im vorliegenden Beispiel sind die Diensteeinrichtungen SMSC1 und SMSC2 an eine erste Zugangseinrichtung IWGMSC1 und die Diensteeinrichtung SMSC an eine weitere Zugangseinrichtung IWGMSC angeschaltet. Für die Zustellung der Kurznachrichten SM werden diese zunächst von der jeweiligen Diensteeinrichtung, beispielsweise SMSC1, bereitgestellt und zur angeschlossenen Zugangseinrichtung, beispielsweise IWGMSC1, übertragen, bevor sie anschließend nach Abfrage von Routinginformationen und gegebenenfalls anderen Informationen von der Teilnehmerdatenbasis HLR an die aktuell zuständige Vermittlungseinrichtung, beispielsweise VMSC, und von dort zur Mobilstation des B-Teilnehmers, beispielsweise der Mobilstation MSB, weitergesendet werden. Die Zugangseinrichtungen IWGMSC1, IWGMSC weisen daher Verbindungen sowohl zur Teilnehmerdatenbasis HLR als auch zur Vermittlungseinrichtung VMSC auf. Die Teilnehmerdatenbasis HLR, die Zugangseinrichtungen IWGMSC1, IMGMSC und die Vermittlungseinrichtung VMSC können entweder zu demselben Mobilfunknetz PLMN gehören oder die Vermittlungseinrichtung VMSC und/oder die Zugangseinrichtungen IWGMSC1, IMGMSC liegen in einem anderen Mobilfunknetz als die Teilnehmerdatenbasis HLR.

Für den Fall, die Zustellung der in der Diensteeinrichtung SMS1 gespeicherten Kurznachricht(en) SM über die angeschlossene Zugangseinrichtung IWGMSC1 und die Vermittlungseinrichtung VMSC zur Mobilstation MSB nicht zum Erfolg geführt hat, veranlaßt die Steuereinheit CM der Teilnehmerdatenbasis VLR für den B-Teilnehmer MS1 das Setzen des Steuerzeichens MNRF. Ursache der nicht erfolgreichen Zustellung ist, daß der im funktechnischen Teilsystem ausgelöste Funkruf (Paging) zur Mobilstation MSB unbeantwortet blieb oder daß von der Mobilstation MSB eine Steuerinformation, das die Speicherkapazität auf dem Teilnehmeridentitätsmodul (SIM) zur Hinterlegung der Kurznachricht nicht ausgereicht hat, rückgemeldet wurde. Durch das Setzen des Steuerzeichens MNRF wird angezeigt, daß in zumindest einer Diensteeinrichtung Kurznachrichten zwischengespeichert sind, die auf die Zustellung zur Mobilstation MSB warten. Die Vermittlungseinrichtung VMSC informiert die Zugangseinrichtung, von der sie die Kurznachricht empfangen hat, über die Meldung der Nichterreichbarkeit der Mobilstation. Die Zugangseinrichtung ihrerseits informiert die Diensteeinrichtung, die zuvor aus den Speichermittel ausgelesene Kurznachricht weiter aufrechtzuerhalten. Die Zugangseinrichtung IWGMSC1 sendet - ausgelöst z.B. durch ihre Steuereinheit CM - eine Meldung zur Teilnehmerdatenbasis HLR aus, in der die Nichterreichbarkeit des mobilen Teilnehmers MS1 über die Mobilstation MSB angezeigt wird. Daraufhin steuert die Teilnehmerdatenbasis HLR durch ihre Speichereinheit CM die Speichereinheit MM mit dem Speichereintrag für den mobilen Teilnehmer MS1 an und veranlaßt das Setzen des Steuerzeichens MNRF sowie die Eintragung von Wartedaten MWD.

Für den Fall, daß eine Zustellung der Kurznachricht aufgrund der mangelnden Speicherkapazität erfolglos versucht wurde, veranlaßt die Steuereinheit CM in der Speichereinheit MM für den mobilen Teilnehmer MS1 das Setzen des Steuerzeichens MCEF. Die Wartedaten MWD kennzeichnen dabei die Diensteeinrichtung, die die Zustellung der gespeicherten Kurznachricht erfolglos versucht hat. Im vorliegenden Beispiel erfolgt also der Eintrag der Wartedaten MWD für die Diensteeinrichtung SMSC1, in der die Kurznachrichten SM weiterhin gespeichert sind. Die Wartedaten MWD umfassen die Adressen der Diensteeinrichtungen, anhand der sie von der oder den Zugangseinrichtungen identifiziert werden können. Die Adressen sind in einer Adressenliste eingetragen. Für das vorliegende Beispiel wird somit an erster Stelle der Warteliste die Adresse ASMSC1 der Diensteeinrichtung SMSC1 eingetragen, die zuvor erfolglos die Zustellung der gespeicherten Kurznachricht SM -beispielsweise wegen Nichterreichbarkeit der Mobilstation MSB- versucht hat. Da auch von anderen Diensteeinrichtungen Kurznachrichten an den mobilen Teilnehmer MS1 mit der Mobilstation MSB gerichtet wurden und ebenfalls nicht zum Erfolg geführt haben, können entsprechende Wartedaten MWD weiterer Diensteeinrichtungen in die Speichereinheit MM eingetragen werden. So sei beispielsweise angenommen, daß eine Kurznachricht von der Diensteeinrichtung SMSC2 als nächstes nicht zugestellt werden konnte und daher die zugehörige Adresse ASMSC2 zur Identifikation der Diensteeinrichtung SMSC2 in die Warteliste eingetragen wird. Es hat sich als vorteilhaft erwiesen, die Wartedaten MWD zu den Diensteeinrichtungen in der Reihenfolge der erfolglosen Zustellversuche in die Teilnehmerdatenbasis HLR aufzunehmen. Eine Eintragung und Abarbeitung nach Prioritäten ist aber grundsätzlich auch denkbar.

Sobald die Teilnehmerdatenbasis HLR erkennt, daß eine Zustellung der Kurznachrichten zur Mobilstation MSB des B-Teilnehmers wieder möglich ist, werden die in der Speichereinheit MM gekennzeichneten Diensteeinrichtungen nacheinander - und nicht alle auf einmal - alarmiert. Dabei erfolgt jeweils eine Alarmierungsprozedur zu der durch die Adresse ASMSC1.. identifizierten Diensteeinrichtung SMSC1..., um ihr die Wiedererreichbarkeit des mobilen Teilnehmers mitzuteilen. Alarmiert wird vorzugsweise in der Reihenfolge der Einträge in der Warteliste, wobei die Wartedaten MWD weiterer Diensteeinrichtungen, die während der Alarmierung einer anderen Diensteeinrichtung einen erfolglosen Zustellungsversuch gestartet haben, zusätzlich an das Ende der aktuellen Reihenfolge aufgenommen werden. Diesen Diensteeinrichtungen wird die Möglichkeit des erneuten Zustellversuchs erst dann signalisiert, wenn sie an der Reihe sind. Wenn die Alarmierungsprozedur zu einer ersten Diensteeinrichtung, im vorliegenden Beispiel zur Diensteeinrichtung SMSC1, von der Teilnehmerdatenbasis HLR gestartet wird, veranlaßt die Steuereinheit CM die Eintragung eines zusätzlichen Steuerzeichens, das aus dem Alarmsteuerzeichen HAF (HLR Alert Flag) besteht. Dieses Alarmsteuerzeichen HAF kennzeichnet den Status der Teilnehmerdatenbasis HLR in Bezug auf vorliegende Wartedaten MWD mehrerer Diensteeinrichtungen. Dies bedeutet, daß die Alarmierungsprozedur unmittelbar nach Bekanntwerden der Wiedererreichbarkeit des mobilen Teilnehmers zu der in der Warteliste an erster Stelle stehenden Diensteeinrichtung ausgeführt wird und gleichzeitig oder im Anschluß daran, falls Adressen von zumindest zwei Diensteeinrichtungen als Wartedaten MWD gespeichert sind, das Alarmsteuerzeichen HAF gesetzt wird. Das Alarmsteuerzeichen HAF wird in der Speichereinheit MM für den mobilen Teilnehmer MS1 durch die Steuereinheit CM erst dann rückgesetzt, wenn nur mehr eine Adresse in der Warteliste existiert. Das Alarmsteuerzeichen HAF kennzeichnet im Unterschied zu den beiden anderen Steuerzeichen MNRF und MCEF einen Zustand der Teilnehmerdatenbasis HLR in Bezug auf das Vorliegen von Kurznachrichten mehrerer Diensteeinrichtungen, um ihre Diensteeinrichtungen nicht gleichzeitig, sondern nacheinander alarmieren zu können. Damit wird eine hohe Signalisierungslast vermieden, die durch nahezu gleichzeitiges Alarmieren mehrerer Diensteeinrichtungen über die erneute Möglichkeit der Zustellung ihrer Kurznachrichten ansonsten entstünde. Darüber hinaus braucht es bei der Vorgehensweise gemäß der Erfindung auch nicht einer Vielzahl von Abweisungsmeldungen von der Teilnehmerdatenbasis HLR an die einzelnen Diensteeinrichtungen -mit Ausnahme der ersten Diensteeinrichtung-, deren Zustellungsversuche nicht zum Erfolg geführt haben, da von der Mobilstation MSB des B-Teilnehmers MS1 immer nur eine Kurznachricht zu einem definierten Zeitpunkt empfangen werden kann.

Das in der Speichereinheit MM für den mobilen Teilnehmer MS1 gesetzte Alarmsteuerzeichen HAF wird von der Teilnehmerdatenbasis HLR bei der Übermittlung von Routinginformationen an die mit der Diensteeinrichtung SMSC1 verbundene Zugangseinrichtung IWGMSC1 mitgesendet, um erst nach dem Eintreffen einer Rückmeldung über die erfolgreiche Zustellung der Kurznachricht durch die Vermittlungseinrichtung VMSC bzw. im Anschluß daran durch die Zugangseinrichtung IWGMSC1 die Alarmierungsprozedur zu der jeweils nächsten Diensteeinrichtung, im vorliegenden Beispiel der Diensteeinrichtung SMSC2, zu starten. Zu diesem Zweck merkt sich die Zugangseinrichtung IWGMSC1, daß das zuvor mitgesendete Alarmsteuerzeichen HAF gesetzt ist, wodurch ihr angezeigt wurde, daß noch Wartedaten zu weiteren Diensteeinrichtungen mit gespeicherten Kurznachrichten für diese Mobilstation MSB in den Speichermitteln der Teilnehmerdatenbasis HLR vorliegen.

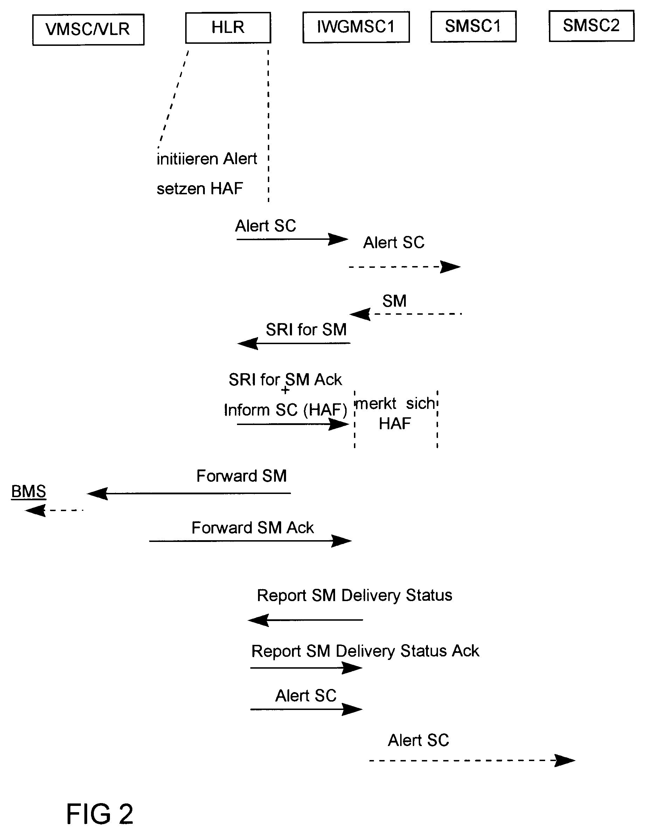

FIG 2 zeigt den Nachrichtenfluß zwischen den Einrichtungen des Mobil-Kommunikationssystems zur aufeinanderfolgenden Alarmierung zumindest zweier Diensteeinrichtungen. Dabei basiert das beschriebene Prinzip auf einer Alarmierungsprozedur gemäß beispielsweise der GSM-Empfehlung 09.02 (Mobile Application Part specification) der ETSI vom November 1994, Seiten 631 und 637 . Die Einrichtungen sind die Vermittlungseinrichtung VMSC mit angeschlossener Teilnehmerdatenbasis VLR, die Teilnehmerdatenbasis HLR, die Zugangseinrichtung IWGMSC1 sowie die Kurznachrichten speichernden Diensteeinrichtungen SMSC1 und SMSC2. Die Teilnehmerdatenbasis HLR erkennt, daß eine Zustellung von Kurznachrichten zur Mobilstation des B-Teilnehmers wieder möglich ist (siehe Beschreibung zu FIG 1 und obige GSM-Empfehlung), initiiert eine Alarmierungsprozedur Alert und veranlaßt das Setzen des Alarmsteuerzeichens HAF in der den mobilen Teilnehmer registrierenden Speichereinheit. Daraufhin sendet die Teilnehmerdatenbasis HLR eine Signalisierungsnachricht Alert SC gemäß dem MAP-Signalisierungsprotokoll (Mobile Application Part) zur Zugangseinrichtung IWGMSC1 aus. Mit dieser Signalisierungsnachricht Alert SC wird der Zugangseinrichtung die Möglichkeit eines erneuten Zustellversuchs der zwischengespeicherten Kurznachricht mitgeteilt. Die eintreffende Signalisierungsnachricht Alert SC wird von ihr zur angeschlossenen Diensteeinrichtung SMSC1, in der die Kurznachricht noch gespeichert ist, weitergesendet. Als Rückmeldung empfängt sie die Kurznachricht(en) SM.

Die Zugangseinrichtung IWGMSC1 fordert daraufhin von der Teilnehmerdatenbasis HLR Routinginformationen, ggf. ergänzt durch Diensteinformationen für den Kurznachrichtendienst, an, indem sie eine Signalisierungsnachricht SRI for SM (Send Routing Info for Short Message) zur Teilnehmerdatenbasis HLR aussendet. Die Routinginformationen weisen im wesentlichen die Adresse der zuständigen Vermittlungseinrichtung auf. Die Teilnehmerdatenbasis HLR bestätigt den Empfang der Anforderung mit der Signalisierungsnachricht SRI for SM Ack und sendet mit ihr zusammen eine weitere Signalisierungsnachricht Inform SC mit den entsprechenden Informationen zur Zugangseinrichtung IWGMSC1 zurück. Diese Informationen umfassen im wesentlichen Angaben zu den Wartedaten und den Zuständen der Steuerzeichen sowie eine Information, ob die Adresse der Diensteeinrichtung eingertragen ist. Zusammen mit den beiden Signalisierungsnachrichten wird das in der Teilnehmerdatenbasis HLR gesetzte Alarmsteuerzeichen HAF mitgesendet, das sich die Zugangseinrichtung IWGMSC1 merkt.

Die Zustellung der in der Zugangseinrichtung IWGMSC1 gepufferten Kurznachricht(en) SM wird durch Aussenden einer Signalisierungsnachricht Forward SM zur zuständigen Vermittlungseinrichtung VMSC ausgelöst. Von dort gelangt die Kurznachricht über die Luftschnittstelle des funktechnischen Teilsystems zu der Mobilstation MSB des B-Teilnehmers. Wenn mehrere Kurznachrichten vorliegen, werden diese nacheinander ohne Beteiligung der Teilnehmerdatenbasis HLR direkt übertragen und dabei jeweils eine Information (more messages to send) mitgesendet, daß noch zumindest eine weitere Nachricht kommt. Hat die Zustellung geklappt, sendet die Vermittlungseinrichtung VMSC eine Bestätigungsnachricht Forward SM Ack zur Zugangseinrichtung IWGMSC1 zurück. Von der Zugangseinrichtung IWGMSC1 wird bei Eintreffen der Rückmeldung die erfolgreiche Zustellung der Kurznachricht(en) an die Mobilstation der Teilnehmerdatenbasis HLR mitgeteilt, indem die Signalisierungsnachricht Report SM delivery status zur Teilnehmerdatenbasis HLR übertragen wird. Die eintreffende Nachricht wird von der Teilnehmerdatenbasis HLR mit der Bestätigungsnachricht Report SM delivery status Ack beantwortet. Erst nach Empfang dieser Statusmeldung über eine wirksame Zustellung startet die Teilnehmerdatenbasis HLR die Alarmierungsprozedur zu der jeweils nächsten Diensteeinrichtung. Dabei wird wiederum die Signalisierungsnachricht Alert SC von der Teilnehmerdatenbasis HLR zu einer weiteren Diensteeinrichtung, wie beispielsweise der Diensteeinrichtung SMSC2, die gemäß dem Beispiel in der Warteliste mit ihren Wartedaten an nächster Stelle steht, ausgesendet.

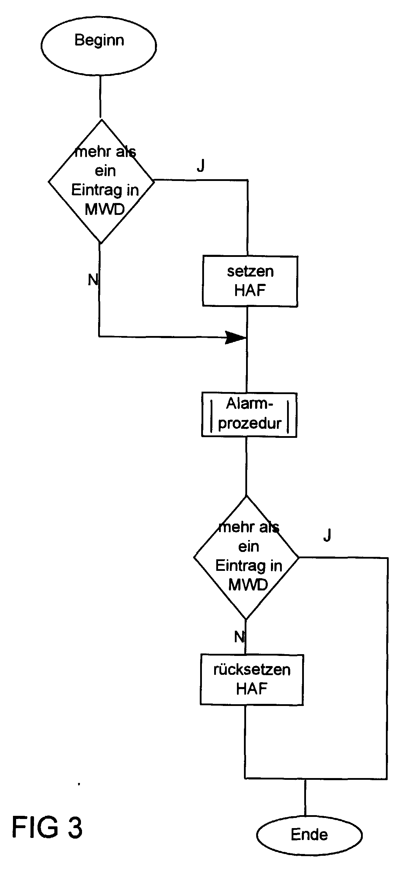

FIG 3 zeigt in einem Flußdiagramm den Ablauf in der Teilnehmerdatenbasis für die Alarmierung einer Diensteeinrichtung über die Möglichkeit einer erneuten Zustellung ihrer gespeicherten Kurznachricht(en). Zunächst wird von der Steuereinheit der Teilnehmerdatenbasis die Speichereinheit des vom Kurznachrichtendienst betroffenen B-Teilnehmers abgefragt, ob mehr als ein Eintrag in den Wartedaten MWD vorliegt. Ist dies nicht der Fall, folgt die Alarmierungsprozedur an die in der Teilnehmerdatenbasis HLR gekennzeichnete eine Diensteeinrichtung. Diese Diensteeinrichtung kann im Anschluß an die Mitteilung, daß ein erneuter Zustellungsversuch wieder möglich ist, die zwischengespeicherten Kurznachrichten über die entsprechenden Einrichtungen des Mobilfunknetzes zur jeweiligen Mobilstation aussenden.

Liegt jedoch mehr als ein Eintrag in den Wartedaten MWD vor, veranlaßt die Teilnehmerdatenbasis über ihre Steuereinheit das Setzen des Alarmsteuerzeichens HAF und beginnt die Alarmierungsprozedur zu der in der Warteliste an erster Stelle stehende Diensteeinrichtung. Nachdem diese Diensteeinrichtung alarmiert ist, wird vor dem Aussenden der nächstfolgenden Alarmierungsnachricht die Speichereinheit des mobilen Teilnehmers abgefragt, ob mehr als ein Eintrag in den Wartedaten MWD noch vorliegt. Ergibt die Abfrage ein positives Ergebnis, wird das Alarmsteuerzeichen HAF nicht rückgesetzt. Vielmehr wird die Alarmierungsprozedur an die andere Diensteeinrichtung, die durch Angabe der zugehörigen Adresse in der Teilnehmerdatenbasis gekennzeichnet ist, ausgelöst und auf die Rückmeldung der Nachricht Report SM Delivery Status Ack gemäß Figur 2 gewartet. Dies bedeutet, daß der Alarmierungsprozess bei dem gemäß der Erfindung immer wieder neu angestoßen wird und nicht alle Alarmierungen parallel - quasi gleichzeitig - in einem Schritt erfolgen. Die Alarmierung wird so lange fortgesetzt, bis ein Rücksetzen des Alarmsteuerzeichens HAF durchgeführt wird, nämlich dann, wenn die Prüfung ergibt, daß nur mehr ein Eintrag in den Wartedaten MWD für den mobilen Teilnehmer registriert ist.

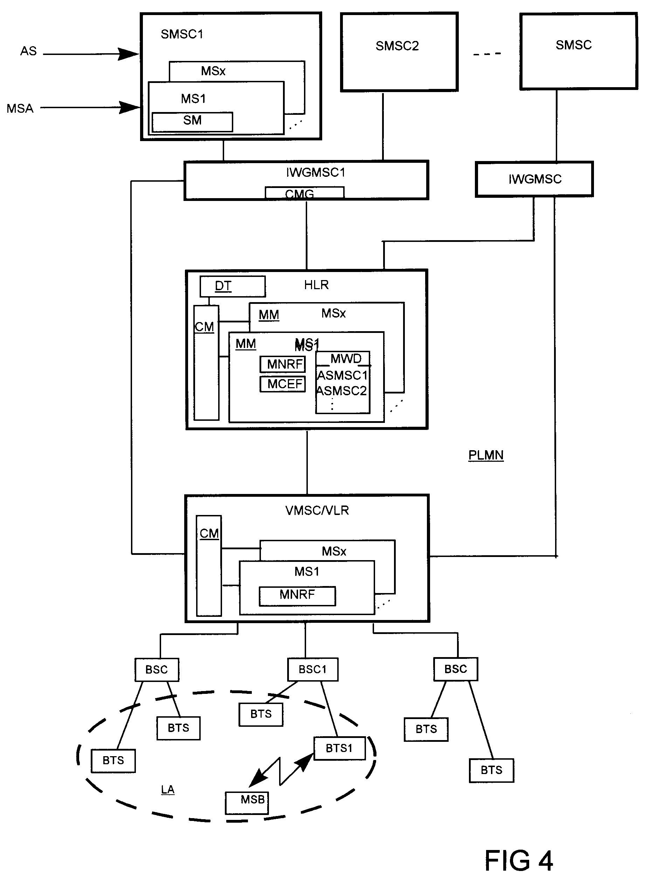

FIG 4 zeigt in einem Blockschaltbild ein Mobil-Kommunikationssystem, das dieselbe Struktur wie das gemäß FIG 1 aufweist. Der Unterschied besteht in der aufeinanderfolgenden Alarmierung der in der Speichereinheit MM gekennzeichneten Diensteeinrichtungen, sobald die Teilnehmerdatenbasis HLR erkennt, daß eine Zustellung der Kurznachrichten zur Mobilstation MSB des B-Teilnehmers wieder möglich ist. Dabei erfolgt jeweils eine Alarmierungsprozedur zu der durch die Adresse ASMSC1.. identifizierten Diensteeinrichtung SMSC1..., um ihr die Wiedererreichbarkeit des mobilen Teilnehmers mitzuteilen. Alarmiert wird vorzugsweise in der Reihenfolge der Einträge in der Warteliste, wobei die Wartedaten MWD weiterer Diensteeinrichtungen, die während der Alarmierung einer anderen Diensteeinrichtung einen erfolglosen Zustellungsversuch gestartet haben, zusätzlich an das Ende der aktuellen Reihenfolge aufgenommen werden. Diesen Diensteeinrichtungen wird die Möglichkeit des erneuten Zustellversuchs erst dann signalisiert, wenn sie an der Reihe sind. Wenn die Alarmierungsprozedur zu einer ersten Diensteeinrichtung, im vorliegenden Beispiel zur Diensteeinrichtung SMSC1, von der Teilnehmerdatenbasis HLR gestartet wird, veranlaßt die Steuereinheit CM das Starten eines Zeitgebers DT zur Verzögerung der nächstfolgenden Alarmierungsprozedur zu einer weiteren Diensteeinrichtung, z.B. der Diensteeinrichtung SMSC2. Für den Zeitgeber DT wird eine Verzögerungszeit eingestellt, bei deren Ablauf erst die nächste Diensteeinrichtung über die Möglichkeit des erneuten Zustellversuchs von der Teilnehmerdatenbasis HLR informiert wird. Die Verzögerungszeit liegt beispielsweise zwischen 5 Sekunden und 10 Minuten. Der Zeitgeber kann auch mehrfach vorhanden und den Diensteeinrichtungen individuell zugeordnet sein, um eine Anpassung der Verzögerungszeiten an die Zahl und Länge der Kurznachrichten unterschiedlich frequentierter Diensteeinrichtungen zu ermöglichen.

Es hat sich als vorteilhaft erwiesen, für den Zeitgeber eine Verzögerungszeit, die an die mittlere Dauer der Zustellungen unterschiedlicher Kurznachrichten angepaßt ist, einzustellen. Auch ist es möglich, den Zeitgeber mit einer Verzögerungszeit, die an die Netzbedingungen des Mobilfunknetzes PLMN angepaßt ist, durch Steuereinheit CM zu versehen. Der Zeitgeber DT kann Bestandteil der Steuereinheit CM sein oder als getrennte Einheit mit ihr in einer Einrichtung zusammengefaßt sein. Nach Ablauf der Verzögerungszeit wird zunächst überprüft, ob eines der Steuerzeichen MCEF, MNRF gesetzt ist, bevor mit der Alarmierungsprozedur für die nächste Diensteeinrichtung begonnen wird.

Dies bedeutet, daß die Alarmierungsprozedur unmittelbar nach Bekanntwerden der Wiedererreichbarkeit des mobilen Teilnehmers zu der in der Warteliste an erster Stelle stehenden Diensteeinrichtung ausgeführt wird und gleichzeitig oder im Anschluß daran, falls Adressen von zumindest zwei Diensteeinrichtungen als Wartedaten MWD gespeichert sind, der Zeitgeber DT gesetzt wird. Der Zeitgeber wird erst dann deaktiviert, wenn nur mehr eine Adresse in der Warteliste existiert. Der Zeitgeber DT bezieht sich im Unterschied zu den beiden Steuerzeichen MNRF und MCEF auf einen Zustand der Teilnehmerdatenbasis HLR in Bezug auf das Vorliegen von Kurznachrichten mehrerer Diensteeinrichtungen, um ihre Diensteeinrichtungen nicht gleichzeitig, sondern nacheinander alarmieren zu können.

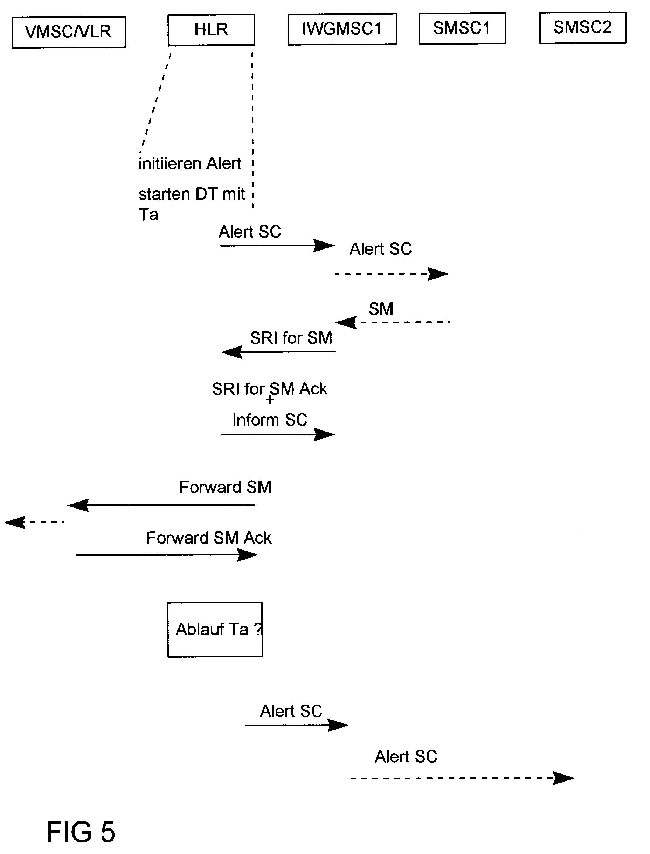

FIG 5 zeigt in Anlehnung an FIG 2 den Nachrichtenfluß zwischen den Einrichtungen des Mobil-Kommunikationssystems zur aufeinanderfolgenden Alarmierung zumindest zweier Diensteeinrichtungen, jedoch unter Verwendung des Zeitgebers von FIG 4. Die Teilnehmerdatenbasis HLR erkennt, daß eine Zustellung von Kurznachrichten zur Mobilstation des B-Teilnehmers wieder möglich ist, initiiert eine Alarmierungsprozedur Alert und veranlaßt das Starten des Zeitgebers DT mit einer Verzögerungszeit Ta. Daraufhin sendet die Teilnehmerdatenbasis HLR eine Signalisierungsnachricht Alert SC gemäß dem MAP-Signalisierungsprotokoll (Mobile Application Part) zur Zugangseinrichtung IWGMSC1 aus. Mit dieser Signalisierungsnachricht Alert SC wird der Zugangseinrichtung die Möglichkeit eines erneuten Zustellversuchs der zwischengespeicherten Kurznachricht mitgeteilt. Die eintreffende Signalisierungsnachricht Alert SC wird von ihr zur angeschlossenen Diensteeinrichtung SMSC1, in der die Kurznachricht noch gespeichert ist, weitergesendet. Als Rückmeldung empfängt sie die Kurznachricht SM auf einem Signalisierungskanal.

Die Zugangseinrichtung IWGMSC1 fordert daraufhin von der Teilnehmerdatenbasis HLR Routinginformationen, ggf. ergänzt durch Diensteinformationen für den Kurznachrichtendienst, an, indem sie eine Signalisierungsnachricht SRI for SM (Send Routing Info for Short Message) zur Teilnehmerdatenbasis HLR aussendet. Die Teilnehmerdatenbasis HLR bestätigt den Empfang der Anforderung mit der Signalisierungsnachricht SRI for SM Ack und sendet mit ihr zusammen eine weitere Signalisierungsnachricht Inform SC mit den entsprechenden Informationen zur Zugangseinrichtung IWGMSC1 zurück.

Die Zustellung der in der Zugangseinrichtung IWGMSC1 gepufferten Kurznachricht SM wird durch Aussenden einer Signalisierungsnachricht Forward SM zur zuständigen Vermittlungseinrichtung VMSC ausgelöst. Von dort gelangt die Kurznachricht über die Luftschnittstelle des funktechnischen Teilsystems zu der Mobilstation MSB des B-Teilnehmers. Hat die Zustellung geklappt, sendet die Vermittlungseinrichtung VMSC eine Bestätigungsnachricht Forward SM Ack zur Zugangseinrichtung IWGMSC1 zurück.

Die Teilnehmerdatenbasis HLR wartet den Ablauf der Verzögerungszeit Ta ab, bevor sie die Alarmierungsprozedur zu der jeweils nächsten Diensteeinrichtung startet. Parallel dazu wird der Zeitgeber mit der Verzögerungszeit für die nächstfolgende Alarmierung eingestellt. Dabei kann wiederum die gleiche Verzögerungszeit Ta oder eine andere Verzögerungszeit als zuvor verwendet werden. Zur Alarmierung wird wiederum die Signalisierungsnachricht Alert SC von der Teilnehmerdatenbasis HLR ausgesendet, jedoch an eine andere Diensteeinrichtung, wie beispielsweise der Diensteeinrichtung SMSC2, die gemäß dem Beispiel in der Warteliste mit ihren Wartedaten an nächster Stelle steht.

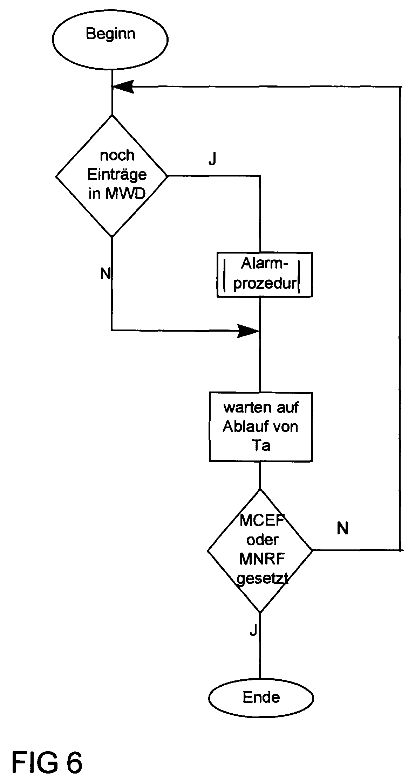

FIG 6 zeigt in einem Flußdiagramm den Ablauf in der Teilnehmerdatenbasis zur aufeinanderfolgenden Alarmierung mehrerer Diensteeinrichtungen bei Verwendung des Zeitgebers. Zunächst wird von der Steuereinheit der Teilnehmerdatenbasis die Speichereinheit des vom Kurznachrichtendienst betroffenen B-Teilnehmers abgefragt, ob mehr als ein Eintrag in den Wartedaten MWD vorliegt. Ist dies nicht der Fall, folgt die Alarmierungsprozedur an die in der Teilnehmerdatenbasis HLR gekennzeichnete eine Diensteeinrichtung. Diese Diensteeinrichtung kann im Anschluß an die Mitteilung, daß ein erneuter Zustellungsversuch wieder möglich ist, die zwischengespeicherten Kurznachrichten über die entsprechenden Einrichtungen des Mobilfunknetzes zur jeweiligen Mobilstation aussenden.

Liegt jedoch mehr als ein Eintrag in den Wartedaten MWD vor, veranlaßt die Teilnehmerdatenbasis über ihre Steuereinheit das Starten des Zeitgebers und beginnt die Alarmierungsprozedur zu der in der Warteliste an erster Stelle stehenden Diensteeinrichtung. Nachdem diese Diensteeinrichtung alarmiert ist, wird vor dem Aussenden der nächstfolgenden Alarmierungsnachricht der Ablauf der eingestellten Verzögerungszeit Ta abgewartet. Danach wird noch abgefragt, ob das Steuerzeichen MCEF oder MNRF gesetzt sind. Ist dies der Fall, folgt derzeit keine weitere Alarmierung. Im anderen Fall wird zur Abfrage verzweigt, ob noch Einträge in der Speichereinheit des mobilen Teilnehmers als Wartedaten MWD vorliegen. Ergibt die Abfrage ein positives Ergebnis, wird eine andere Diensteeinrichtung, die durch Angabe einer Adresse in der Teilnehmerdatenbasis gekennzeichnet ist, durch die Alarmierungsprozedur verständigt. der obige Prozeß wird wiederholt durchgeführt, bis alle in der Teilnehmerdatenbasis gekennzeichneten Diensteeinrichtungen über die Möglichkeit der Zustellung ihrer Kurznachrichten informiert sind.

## Patentansprüche

1. Verfahren zur Steuerung eines Kurznachrichtendienstes in einem Mobil-Kommunikationssystem, bei dem
- von einer Mobilstation (MSB) eines mobilen Teilnehmers, der in einer Teilnehmerdatenbasis (HLR) eines Mobilfunknetzes (PLMN) registriert ist, Kurznachrichten empfangen werden können, die in für den Kurznachrichtendienst vorgesehenen Diensteeinrichtungen (SMSC1, SMSC2) gespeichert und über zumindest eine mit den Diensteeinrichtungen und der Teilnehmerdatenbasis (HLR) verbundene Zugangseinrichtung (IWGMSC1) zu einer Vermittlungseinrichtung (VMSC), in deren Bereich die Mobilstation aktiviert ist, und von dort zur Mobilstation (MSB) gesendet werden,
- Wartedaten (MWD) zur Kennzeichnung der Diensteeinrichtungen (SMSC1, SMSC2...), die eine Zustellung der gespeicherten Kurznachrichten erfolglos versucht haben, sowie Steuerzeichen (MNRF, MCEF) zur Kennzeichnung der Ursache der erfolglosen Zustellung in die Teilnehmerdatenbasis (HLR) für den mobilen Teilnehmer eingetragen werden, und
- von der Teilnehmerdatenbasis (HLR), sobald sie erkennt, daß eine Zustellung von Kurznachrichten zur Mobilstation (MSB) wieder möglich ist, die gekennzeichneten Diensteeinrichtungen (SMSC1, SMSC2...) nacheinander alarmiert werden.

2. Verfahren nach Anspruch 1, bei dem
ein Alarmsteuerzeichen (HAF) zur Kennzeichnung, daß Wartedaten (MWD) für zumindest zwei Diensteeinrichtungen (SMSC1, SMSC2...) vorliegen, in die Teilnehmerdatenbasis (HLR) für den mobilen Teilnehmer eingetragen, wenn eine Alarmierungsprozedur zu einer ersten Diensteeinrichtung (SMSC1) gestartet wird.

3. Verfahren nach Anspruch 2, bei dem
- das Alarmsteuerzeichen (HAF) von der Teilnehmerdatenbasis (HLR) bei der Übermittlung von Routinginformationen an die mit der jeweiligen Diensteeinrichtung (SMSC1) verbundene Zugangseinrichtung (IWGMSC1) mitgesendet wird,
- von der Zugangseinrichtung (IWGMSC1) auf eine Rückmeldung der Vermittlungseinrichtung (VMSC) über die erfolgreiche Zustellung der Kurznachricht gewartet und bei Eintreffen der Rückmeldung die erfolgreiche Zustellung der Teilnehmerdatenbasis (HLR) mitgeteilt wird, von der daraufhin die Alarmierungsprozedur zu der jeweils nächsten Diensteeinrichtung (SMSC2) gestartet wird.

4. Verfahren nach einem der vorhergehenden Ansprüche, bei dem
das Alarmsteuerzeichen (HAF) in der Teilnehmerdatenbasis (HLR) gelöscht wird, sobald nur mehr die Wartedaten zu einer Diensteeinrichtung vorliegen.

5. Verfahren nach Anspruch 1, bei dem
eine Alarmierungsprozedur zu einer Diensteeinrichtung (SMSC1) initiiert und zumindest ein Zeitgeber (DT) zur Verzögerung der jeweils nachfolgenden Alarmierungsprozedur zu einer weiteren Diensteeinrichtung (SMSC2) gestartet wird.

6. Verfahren nach Anspruch 5, bei dem
für den Zeitgeber (DT) eine Verzögerungszeit (Ta), die an die mittlere Dauer der Zustellungen unterschiedlicher Kurznachrichten angepaßt ist, eingestellt wird.

7. Verfahren nach Anspruch 5 oder 6, bei dem
für den Zeitgeber (DT) eine Verzögerungszeit, die an die Netzbedingungen des Mobilfunknetzes (PLMN) angepaßt ist, eingestellt wird.

8. Verfahren nach einem der Ansprüche 5 bis 7, bei dem
mehrere Zeitgeber (DT) für die Diensteeinrichtungen (SMSC1, SMSC2) verwendet werden.

9. Verfahren nach einem der vorhergehenden Ansprüche, bei dem
die Wartedaten (MWD) zu den Diensteeinrichtungen (SMSC1, SMSC2) in der Reihenfolge der erfolglosen Zustellversuche in die Teilnehmerdatenbasis (HLR) aufgenommen werden.

10. Verfahren Anspruch 9, bei dem
die Wartedaten (MWD) weiterer Diensteeinrichtungen, die während der Alarmierung einer Diensteeinrichtung (SMSC1) einen erfolglosen Zustellungsversuch gestartet haben, zusätzlich an das Ende der Reihenfolge aufgenommen werden und den jeweiligen Diensteeinrichtungen die Möglichkeit eines erneuten Zustellversuchs signalisiert wird, sobald sie an der Reihe sind.

11. Verfahren nach einem der vorhergehenden Ansprüche, bei dem Adressen (ASMSC1, ASMSC2) der Diensteeinrichtungen (SMSC1, SMSC2), anhand der sie von der oder den Zugangseinrichtungen (IWGMSC1) identifiziert werden, als Wartedaten (MWD) verwendet und in eine Adressenliste der Teilnehmerdatenbasis (HLR) eingetragen werden.

12. Verfahren nach einem der vorhergehenden Ansprüche, bei dem die Teilnehmerdatenbasis (HLR), die Zugangseinrichtung (IWGMSC1) und die Vermittlungseinrichtung (VMSC) zu demselben Mobilfunknetz (PLMN) gehören oder die Vermittlungseinrichtung (VMSC) und/oder die Zugangseinrichtung (IWGMSC1) in einem anderen Mobilfunknetz als die Teilnehmerdatenbasis (HLR) liegen.

13. Mobil-Kommunikationssystem zur Steuerung eines Kurznachrichtendienstes mit
- einer Mobilstation (MSB) eines mobilen Teilnehmers, der in einer Teilnehmerdatenbasis (HLR) eines Mobilfunknetzes registriert ist, zum Empfang von Kurznachrichten,
- Diensteeinrichtungen (SMSC1, SMSC2), die für den Kurznachrichtendienst vorgesehen sind und in denen die Kurznachrichten gespeichert sind, und zumindest eine mit den Diensteeinrichtungen und der Teilnehmerdatenbasis (HLR) verbundene Zugangseinrichtung (IWGMSC1), die die Kurznachrichten von den Diensteeinrichtungen empfängt,
- einer Vermittlungseinrichtung (VMSC), in deren Bereich die Mobilstation aktiviert ist und die die Kurznachrichten von der Zugangseinrichtung empfängt und zur Mobilstation (MSB) weitersendet, und mit
- Speichermittel (MM) in der Teilnehmerdatenbasis (HLR), in denen Wartedaten (MWD) zur Kennzeichnung der Diensteeinrichtungen (SMSC1, SMSC2...), die eine Zustellung der gespeicherten Kurznachrichten erfolglos versucht haben, sowie Steuerzeichen (MNRF, MCEF) zur Kennzeichnung der Ursache der erfolglosen Zustellung für den mobilen Teilnehmer eingetragen sind, sowie
- Steuermittel (CM) in der Teilnehmerdatenbasis (HLR), die, sobald sie erkennen, daß eine Zustellung von Kurznachrichten zur Mobilstation (MSB) wieder möglich ist, die gekennzeichneten Diensteeinrichtungen (SMSC1, SMSC2...) nacheinander alarmieren.

14. Mobil-Kommunikationssystem nach Anspruch 13,
**dadurch gekennzeichnet,**
daß in den Speichermittel (CM) der Teilnehmerdatenbasis (HLR) ein Alarmsteuerzeichen (HAF) zur Kennzeichnung, daß Wartedaten (MWD) für zumindest zwei Diensteeinrichtungen (SMSC1, SMSC2...) vorliegen, für den mobilen Teilnehmer eintragbar ist, wenn die Steuermittel der Teilnehmerdatenbasis (HLR) eine Alarmierungsprozedur zu einer ersten Diensteeinrichtung (SMSC1) starten.

15. Mobil-Kommunikationssystem nach Anspruch 14,
**dadurch gekennzeichnet,**
- daß die Steuermittel (CM) der Teilnehmerdatenbasis (HLR) das Alarmsteuerzeichen (HAF) bei der Übermittlung von Routinginformationen an die mit der jeweiligen Diensteeinrichtung (SMSC1) verbundene Zugangseinrichtung (IWGMSC1) mitsenden,
- daß die Zugangseinrichtung (IWGMSC1) Steuermittel (CMG) zum Empfang einer Rückmeldung von der Vermittlungseinrichtung (VMSC) über die erfolgreiche Zustellung der Kurznachricht sowie zum Senden einer Meldung über die erfolgreiche Zustellung an die Teilnehmerdatenbasis (HLR) aufweist, deren Steuermittel daraufhin die Alarmierungsprozedur zu der jeweils nächsten Diensteeinrichtung (SMSC2) starten.

16. Mobil-Kommunikationssystem nach Anspruch 13,
**dadurch gekennzeichnet,**
daß die Steuermittel (CM) in der Teilnehmerdatenbasis (HLR) eine Alarmierungsprozedur zu einer Diensteeinrichtung (SMSC1) initiieren und zumindest einen Zeitgeber (DT) zur Verzögerung der jeweils nachfolgenden Alarmierungsprozedur zu einer weiteren Diensteeinrichtung (SMSC2) starten.
